# EUROPEAN PATENT APPLICATION

(11) **EP 1 489 536 A1**
(43) Date of publication of application: **22.12.2004**
(21) Application number: 02707148.9
(22) Date of filing: 25.03.2002
(51) Int. Cl.: G06F 17/60

(54) **HOTEL FACILITY RESERVATION STATUS RETRIEVING DEVICE AND METHOD; AND RECORDING MEDIUM**

(71) Applicant: Ishibashi Incorporated, Kashiwazaki-shi, Niigata 945-0052 (JP)
(72) Inventor: ISHIBASHI, Tatsuya, ISHIBASHI INCORPORATED, Kashiwazaki-shi, Niigata 945-0052 (JP)
(74) Representative: Leson, Thomas Johannes Alois, Dipl.-Ing.
(86) International application number: PCT/JP2002/002861
(87) International publication number: WO 2003/081497

(57) **Abstract**

Guest room vacancy information 221d is stored by guest room information storing means 30, corresponding to respective time blocks 221c obtained by dividing 24 hours, and an input of a room entry time and a room leaving time which an accommodation user desires is received by input receiving means 10. Then, using vacancy information retrieving means 20, the guest room vacancy information 221d corresponding to a room entry time block including the room entry time received by the input receiving means 10, and the guest room vacancy information 221d corresponding to a room leaving time block including the room leaving time received by the input receiving means 10 are retrieved from the guest room information storing means 30 to output a retrieval result obtained by the retrieval, by output means 40.

## Description

### Technical Field

The present invention relates to an accommodation reservation status retrieval device for retrieving guest room vacancy information of an accommodation and reserving a guest room.

### Background Art

When reserving utilization of a guest room of an accommodation such as a hotel and Japanese inn, normally, guest room vacancy information is beforehand inquired about with the accommodation by telephone or by fax. Then, the type of a desired room, the number of guests and the like are appointed and the number of days of stay is imparted in at least one night unit to perform the reservation. By the way, in current hotels, time from check-in time to check-out time is set as one night, and hotel charges are uniformly collected in one night unit from all users. Furthermore, when a guest desires extension of stay time, one more night is reserved or extension in one hour unit is requested, and extension charges are paid accordingly.

However, some accommodation users do not desire the utilization in one night unit. In other words, some users do not desire to stay one night but desire utilization only in the daytime, for example, in the case of temporary rest after leisure activities or utilization for receiving family members in ceremonial occasions or the like. Other users desire to check in at a considerably later time than a time which is set up by the accommodation provider side as a time when check in is possible. In this case, although not using all the time when the accommodation side allows the users to use as one night, the users should pay the same charges as those who utilize all the time, as charges for one night, which causes the users to feel that they pay wasteful charges. Accordingly, although the users want to utilize an accommodation only for a part of time in a day, they hesitate to utilize the accommodation and consequently it becomes difficult to use the accommodation. Furthermore, from a standpoint of the accommodation provider side, hesitating the utilization in one night unit reduces a capacity utilization ratio of guest rooms, and a guest room is left vacant in a whole day, thereby bringing about a great deal of loss.

On the other hand, in order to correct such a defect, it can be considered to use a system in which accounting is performed per unit time as used in hotels of adult-entertainment-related business. However, when using such a system, users cannot utilize an accommodation at ease owning to the anxiety of increase in charge, although they utilize the accommodation for feeling easy. Furthermore, such a hotel cannot be reserved in advance.

Accordingly, in the present invention, it is the object to get rid of the above-mentioned defects and to provide an accommodation reservation status retrieval device which enables accommodation users to perform reservation of an accommodation matching their own utilization time, thereby facilitating the utilization of the accommodation, and enlarging the utilization aspects of the accommodation, which dramatically improves the capacity utilization ratio of guest rooms of the accommodation.

### Disclosure of the Invention

The present invention relates to a reservation status retrieval device for an accommodation in order to solve the above-mentioned problems, wherein 24 hours are beforehand divided into two or more time blocks, and a reservation status of guest rooms can be retrieved for each of the time blocks.

In this manner, by enabling the retrieval for each of the time blocks, furthermore, by enabling reservation and utilization on the basis of this retrieval result, an accommodation user can perform the guest room reservation and payment of a charge matching his or her own utilization time. Therefore, the user can feel cost reduction as compared with the case where the charge is paid in at least one night unit, which makes the utilization of the accommodation easier.

Furthermore, as a specific aspect, it can be considered that remaining time obtained by calculating time from a start time of the time block including a room entry time to the room entry time, and time from a room leaving time to an end time of the time block including the room leaving time is calculated to output the calculation result.

Thereby, the accommodation provider side can use the remaining time as an index when adding various services or the like. For example, points or the like are added to the user with the remaining time used as a measure, and various services such as discount service at the next utilization time can be added.

In addition, in the case where the above-mentioned accommodation reservation status retrieval device is used in an accommodation having two or more guest rooms to be provided, such a device is preferably applied to a facility where all the guest rooms have the same type of layout.

Thereby, the user can expect similar quality whichever room is assigned as long as it is in the same accommodation, and the user can obtain the sense of ease with respect to the accommodation. Furthermore, from a standpoint of the accommodation provider side, the room type does not need to be considered when receiving the reservation, and the reservation can be received only in consideration of the time blocks, whereby errors on office work such as double booking can be eliminated.

### Brief Description of the Drawings

Fig. 1 is a system schematic diagram showing one embodiment of the present invention.

Fig. 2 is a system functional block diagram in the same embodiment.

Fig. 3 is a memory map of a server computer in the same embodiment.

Fig. 4 is a memory map of the server computer in the same embodiment.

Fig. 5 is a flow chart of the server computer in the same embodiment.

### Best Mode for Carrying out the Invention

Hereinafter, one embodiment of the present invention will be described in reference to the drawings.

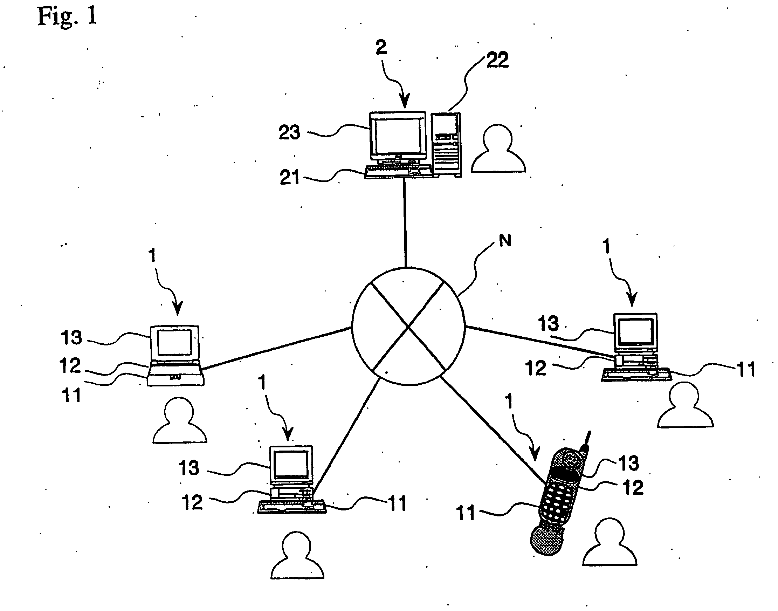

Fig. 1 is a schematic diagram showing a system of the present invention, which is configured of a client computer 1 provided connectably via a network N such as the internet, and the server computer 2. The system in this embodiment comprises the client computer 1 operated by a facility user performing reservation of an accommodation such as a hotel, and the server computer 2 which is an accommodation reservation status retrieval device possessed by a facility provider side providing the accommodation.

This client computer 1 is enabled to access the server computer 2 via the network N such as the internet and the client computer 1 may be things like a cellular phone and a pocket type mobile computer. In this embodiment, a description will be given taking a general-purpose personal computer as an example. In other words, this client computer 1 is configured of an input unit 11 made of a key board and the like, a body 12 comprising a CPU 120, a memory therein, and a drive for write processing with respect to a portable recording medium such as a flexible disk, and a display unit 13 displaying information acquired via the network N, or the like.

On the other hand, the server computer 2 is accessibly connected by the above-mentioned client computer 1 via the networkN, and the server computer 2 is made of a dedicated terminal, a general-purpose personal computer or the like. Here, a general-purpose personal computer will be described. More specifically, this server computer 2 is configured of an input unit 21, a body unit 22, a display unit 23, and the like similarly to the client computer 1, and the server computer 2 is designed to receive information of a day and time of desired utilization which is input by the client computer 1 so that the user can retrieve a reservation status of an accommodation, reserve the accommodation and so on.

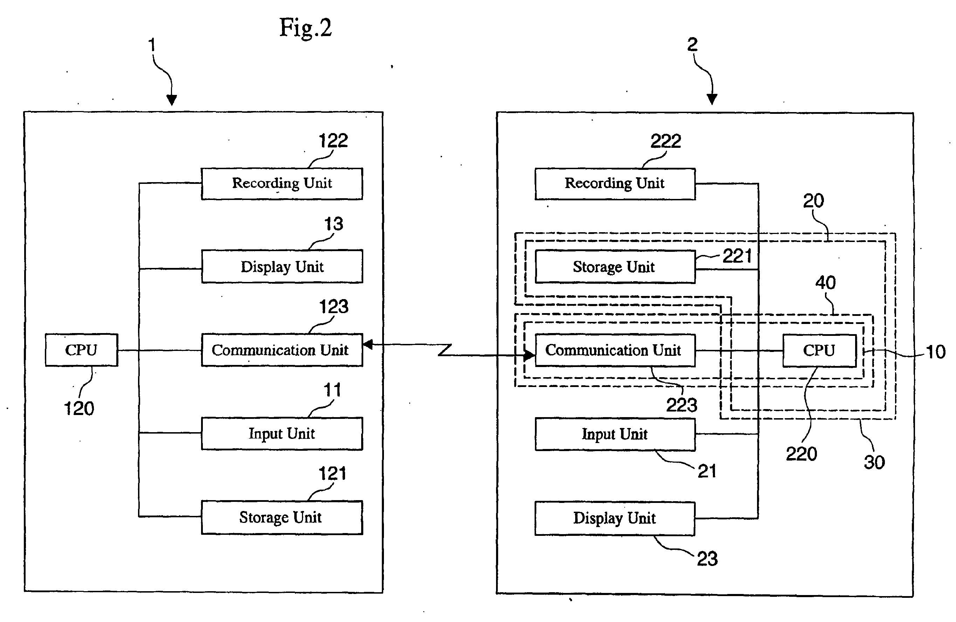

Fig. 2 is a functional block diagram of the system configured in this manner.

The client computer 1 comprises the CPU 120 operating a predetermined application based on a program stored in a storage unit 121, and the storage unit 121, a recording unit 122, a communication unit 123, and the above-mentioned input unit 11 and the display unit 13 are connected and provided to this CPU 120. The input unit 11 receives key operations of a day and time of stay, room type, number of users which the accommodation user desires and the like, and the storage unit 121 mainly stores the program or the like. Furthermore, the recording unit 122 is made of a floppy disk drive or the like so as to be able to write and read predetermined information with respect to a flexible disk inserted into the body 12. Then, the communication unit 123 is connected to the CPU 120 so as to be able to access the server computer 2 via the network N.

The server computer 2 has a predetermined program stored in a storage unit 221, and the server computer 2 comprises a CPU 220 operating various application software based on this program. This CPU 220 is provided with the input unit 21 and the display unit 23 by being connected to the body 22, and further with the storage unit 221 and a communication unit 223 therein. The storage unit 221 is designed to store the predetermined program and to be able to store guest room vacancy information described later. Incidentally, the program can be stored in a computer readable recording medium such as CD-ROM, for example to be installed from a recording unit 222. Furthermore, the communication unit 223 is designed to be able to access the client computer 1 via the network N.

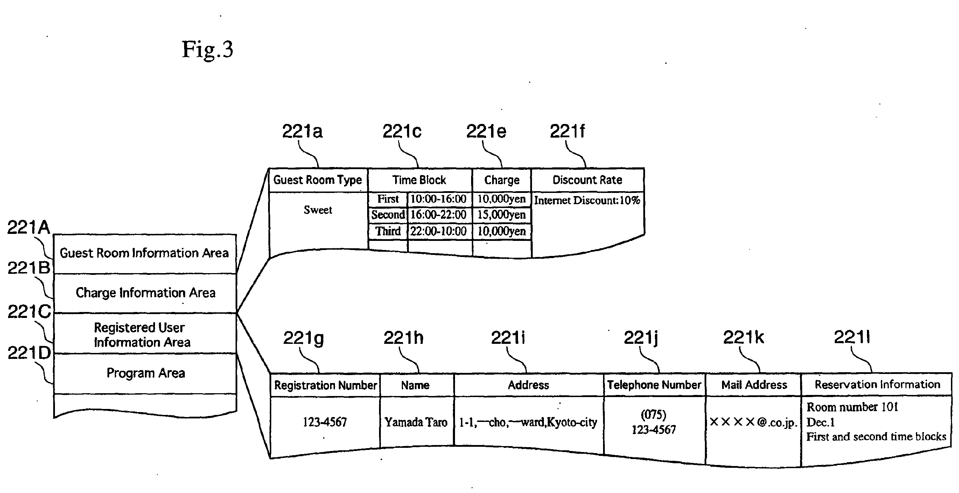

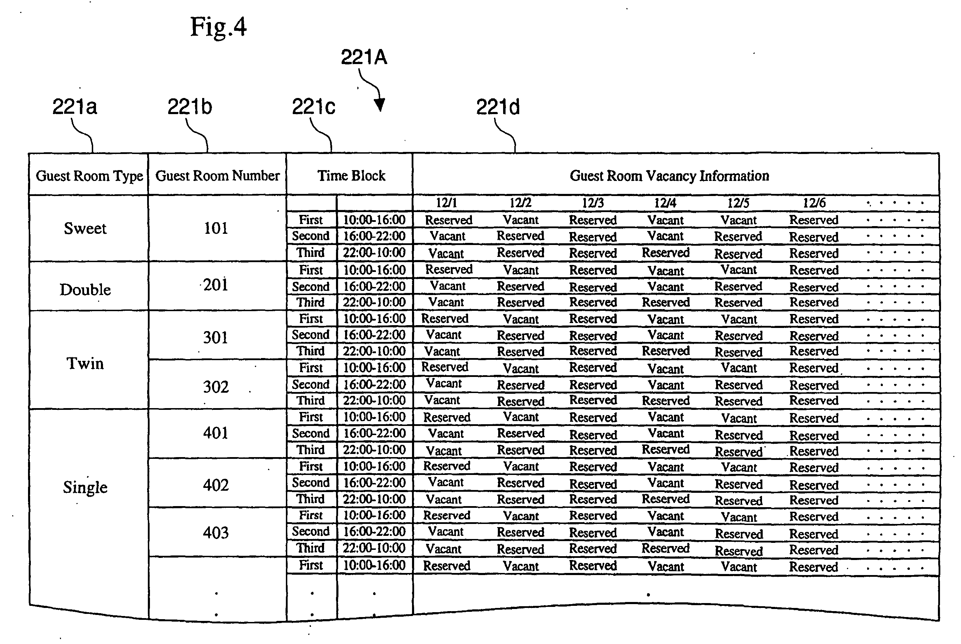

Figs. 3 and 4 exemplarily show the information stored in the storage unit 221 of this server computer 2.

The storage unit 221 of the server computer 2 is provided with a guest room information area 221A, a charge information area 221B, a registered user information area 221C, a program area 221D and the like.

This guest room information area 221A, as shown in Fig. 4, stores a guest room type 221a of an accommodation and a guest room number 221b included in this guest room type 221a. With respect to this guest room number 221b, time blocks 221c demarcated by a start time and an end time and guest room vacancy information 221d corresponding to the respective time blocks 221c are stored in association with a date. Specifically, the time blocks 221c take the form of dividing 24 hours into three: the first time block 221c has a start time of 10:00 a.m. and an end time of 16: 00 p.m., the second time block 221c has a start time of 16:00 p.m. and an end time of 22:00 p.m., and the third time block 221c has a start time of 22:00 p.m. and an end time of 10:00 a.m. the next day, in which the start time and the end time of the respective time blocks 221c are continued.

The charge information area 221B is designed to store a charge 221e corresponding to each of the guest room types 221a and each of the time blocks 221c, discount rate calculation information 221f, and the like.

The registered user information area 221C is designed to store personal information such as a name 221h, an address 221i, a telephone number 221j, and an electronic mail address 221k of an accommodation user, and reservation information 221l of the accommodation user or the like in association with a registration number 221g assigned to each of the accommodation users.

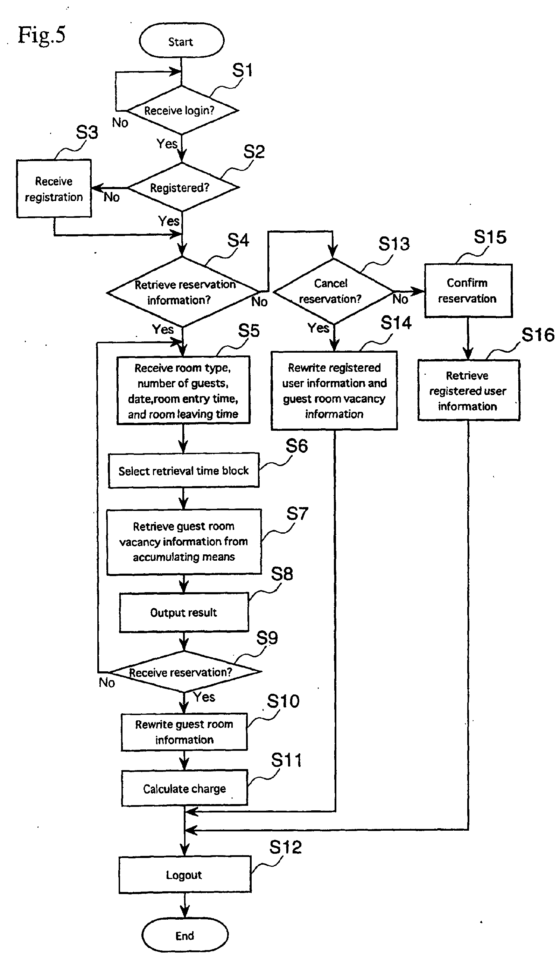

The program area 221D is designed to store a program or the like for executing a flow shown in Fig. 5 via the CPU 220 or the like.

Incidentally, by the functional configuration structured in this manner, input receiving means 10 is made of the communication unit 223 and the CPU 220 controlling the communication unit 223 in the server computer 2 provided on the accommodation provider side, and a guest room information storing means 30 is made of the storage unit 221 and the CPU 220 controlling the storage unit 221 in the server computer 2. Furthermore, vacant room information retrieval means is made of the storage unit 221 and the CPU 220 controlling the storage unit 221 in the server computer 2, and output means 40 is made of the communication unit 223 and the CPU 220 controlling the communication unit 223 in the server computer 2.

Next, in reference to Fig. 5, a description will be given of the flow when by the system configured in this manner, an accommodation user performs retrieval and reservation of a guest room or the like using the client computer 1 with respect to the server computer 2 on the accommodation provider side.

First, the accommodation user connects the client computer 1 to the server computer 2 via the network N such as the internet to login the server computer 2. The server computer 2 receives this login information (Step S1: YES), and if registration has not been performed in advance, (Step S2: NO) a display to prompt the user to register is sent. Then, information such as a name, electronic mail address, telephone number or the like is received to send the registration number 221g, and reservation status retrieval is enabled (Step S3). Furthermore, in the case where the registration has been performed in advance (Step S2: YES), the server computer 2 sends a selection display to select any one of accommodation reservation, accommodation reservation cancel, and accommodation reservation confirmation.

Here, when an accommodation reservation display is selected (Step S4: YES), a reservation receipt start display is sent, and information such as a room type, number of users, date, room entry time, and room leaving time is received by the input receiving means 10 (Step S5). Then, based on this received information, the server computer 2 retrieves the guest room vacancy information 221d applicable to the guest room that the facility user desires by the vacancy information retrievingmeans 20. As a procedure of the retrieval, in order to retrieve the vacancy information for all stay time, there are selected a room entry time block including the room entry time, an room leaving time block including the room leaving time, which are received by the input receivingmeans 10, and the time block 221c continuing the room entry time block and the room leaving time block. That is, based on the start times and the end times of the time blocks 221c stored in the guest room information storing means 30, there are selected retrieval time blocks for covering all the stay time desired by the user to perform the retrieval (Step S6). For example, in the case where the room entry time is received as 11:00 a.m., and the room leaving time is received as 20:00 p.m. by the input receiving means 10, the first time block 221c is selected as the room entry time block, and the second time block 221c is selected as the room leaving time block to set the first time block 221c and the second time block 221c as the retrieval time blocks. Furthermore, in the case where the room entry time is received as 16:00 p.m. and the room leaving time is received as 21:00 a.m., both the room entry time and the room leaving time are included in the time zone of the second block, so that the second time block 221c is set as the retrieval time block. Furthermore, in the case where the room entry time is received as 11:00 a.m., and the room leaving time is received as 10:00 a.m. the next day, the first time block 221c is selected as the room entry time block, and the third time block 221c is selected as the room leaving time block. Furthermore, since the end time of the first block time 221c and the start time of the third block time 221c are not continued, the second time block 221c is selected as a block to continue the room entry time up to the room leaving time. Consequently, the first time block 221c, the second time block 221c, and the third time block 221c are set as the retrieval time blocks.

Next, the server computer 2 retrieves the guest room vacancy information 221d, by the vacancy information retrieving means 20, from the guest room information area 221A stored in the guest room information storing means 30 on the basis of the room type and date, for and on which the reservation is desired, and the information of the retrieval time blocks (Step S7).

After finishing the retrieval, when there is a vacant guest room, a display to inform that there is a vacant guest room and to prompt reservation confirmation of the accommodation user is sent by the output means 40, and when there is no vacant guest room, a reservation status retrieval display is sent again (Step S8). Then, the server computer 2, when receiving information indicating the reservation (Step S9), receives the reservation by reservation means made of the CPU 220 controlling the storage unit 221 to rewrite the guest room vacancy information 221d of the guest room information storing means 30 into reservation and to store the rewritten guest room vacancy information 221d (Step S10). The sever computer 2 also stores the reservation information such as the scheduled day and time of the stay in the registered user information in association with the registration number 221g of the accommodation user.

Next, charge information corresponding to the time blocks 221c reserved by the accommodation user is read from the charge information area 221B of the guest room information storing means 30 to calculate the charge required for utilizing the accommodation (Step S11). After the charge is calculated, the server computer 2 sends the calculated result to the client computer 1 by the output means 40. Then, by receiving a logout signal from the client computer 1 (Step S12), the flow of the reservation status retrieval or the like is finished.

On the other hand, after login, when a reservation cancel display is selected (Step S13), guest room information and the registered user information are rewritten by the guest room information storing means (Step S14). Alternatively, when a reservation confirmation display is selected (Step S15), the reservation of the accommodation user is confirmed by referring to the registered user information (Step S16) to send the result to the client computer 1. Then, by receiving the logout signal from the client computer 1 (Step S12), the flow of the reservation information retrieval or the like is finished.

In this way, according to the present embodiment, from a standpoint of the accommodation user side, since the retrieval, reservation and payment of the charge for a guest room matching his or her own utilization time are enabled, cost reduction is felt as compared with the case where the charge is paid in at least one night unit, which makes the utilization of the accommodation easier. Furthermore, since the charge is kept constant until the end time of the set time block 221c, the user can utilize the accommodation at ease without any anxiety of the charge until the end time. Furthermore, instead of conventionally considering accommodations to have utilization application only for travelers, the utilization application can be enlarged by utilizing the accommodations in the case of only temporary rest on the way home from leisure activities, only stay after an event with alcoholic drinking such as a year-end party or the like, for example. Furthermore, from a standpoint of the accommodation provider side, it becomes easy for the users to utilize the accommodations as described above, whereby the accommodation can be utilized even for only a part of time in a day, otherwise the room would be vacant in a whole day in the conventional case. Furthermore, if the time blocks 221c are different, reservations of two or more groups of users in a day with respect to one room are possible.

Furthermore, according to another embodiment, when actual time when a user utilizes an accommodation on a stay day does not satisfy the start time and the end time of the time blocks 221c, it can be considered that points corresponding to remaining time are given to the user, and that discount service matching the points or the like is provided the next time. Specifically, the server computer 2 makes the CPU 220 and peripheral devices function as remaining time calculating means to calculate time from the start time of the room entry time block to the room entry time or time to the end time of the room leaving time block by the program stored in the storage unit 221. Furthermore, by the program stored in the storage unit 221 or the like, the server computer 2 makes the CPU 220 and the peripheral devices function as the output means 40 to output a calculation result calculated by the remaining time calculating means. This calculation result is converted into points to be stored in the storage unit 221 as the registered user information in association with the registration number 221g, and next time the user utilizes, the discount service matching the points or the like is provided upon calculating the charge. By such an embodiment, the accommodation provider side can further promote the utilization of the accommodation by adding various services or the like to accommodation users with the remaining time used as an index.

Furthermore, in the embodiment of the present invention, although the accommodation has various guest room types 221a, the system can also be applied to an accommodation in which all guest rooms have the same layout, that is, an accommodation having one guest room type 221a. Thereby, the user can expect similar quality whichever guest room is assigned to the user as long as the guest room is in the same accommodation, and can obtain the sense of ease with respect to the accommodation. From a standpoint of the accommodation provider side, the room type or the like does not need to be considered when receiving the reservation, and the reservation can be received only in consideration of the time blocks 221c, whereby errors on office work such as double booking can be eliminated.

Furthermore, in the embodiment of the present invention, although the server computer 2 is connected to the client computer 1 via the network N, it is possible to perform the reservation status retrieval, reservation of the accommodation or the like only by the server computer 2 without having the client computer 1. Specifically, the CPU 220 controlling the input unit 21 of the server computer 2 is defined as the input receiving means 10, and the CPU controlling the display unit 23 of the server computer 2 is defined as the output means 40. As to data required for retrieving vacant room information, the accommodation user may inform the provider of the room entry time of the desired reservation or the like'by fax, telephone, or directly visiting the accommodation. Such information may be input to the server computer 2 by the accommodation provider or directly by the accommodation user.

Sales information of noted products or the like may be sent concurrently with the reservation confirmation to receive an order from the user. Furthermore, when calculating the charge, if the stay day falls on a lucky day for the user according to fortune telling or the like or when the user applies for the reservation via the internet, the charge may be discounted by setting a predetermined discount service in the case of early reservation date or the like.

### Industrial Applicability

The present invention is embodied in the above-mentioned configuration to bring about effects described below.

In other words, according to the present invention, there is enabled retrieval of reservation status in only a part of the time zones in a day when an accommodation user wants to utilize an accommodation so as to reserve the accommodation. Thereby, from a standpoint of the accommodation user side, guest room reservation and payment of charge matching his or her own utilization time can be performed. Thus, cost reduction is felt as compared with the case where the charge is paid in at least one night unit, which makes the utilization of the accommodation easier. Furthermore, since the charge is kept constant until the end time of the set time block, the user can utilize the accommodation at ease without any anxiety of the charge until the end time. Furthermore, instead of conventionally considering accommodations to have utilization application only for travelers, the utilization application can be enlarged by utilizing the accommodations in the case of only temporary rest on the way home from leisure activities, only stay after an event with alcoholic drinking such as a year-end party or the like, for example. From a standpoint of the accommodation provider side, it becomes easy for the users to utilize the accommodations as described above, whereby the accommodation can be utilized for only a part of time in a day, otherwise the room would be vacant in a whole day in the conventional case, which increase the capacity utilization ratio of guest rooms. Furthermore, if the time blocks are different, reservations of two or more groups of users in a day with respect to one room are possible.

Furthermore, as a specific aspect, remaining time is obtained by calculating the time from the start time of the time block including the room entry time to the room entry time and the time from the room leaving time to the end time of the time block including the room leaving time, and this calculation result is output. Thereby, the accommodation provider side can add various services or the like with the remaining time used as an index.

In addition, by setting all guest rooms as a guest room type having the same layout, the user can expect similar quality whichever guest room is assigned to the user as long as the guest room is in the same accommodation. The user can also obtain the sense of ease with respect to the accommodation. From a standpoint of the accommodation provider side, the room type or the like does not need to be considered when receiving reservation, and reservation can be received only in consideration of the time blocks, whereby errors on office work such as double booking can be eliminated.

## Claims

1. An accommodation reservation status retrieval device, comprising:
guest room information storing means for storing guest room vacancy information corresponding to respective time blocks obtained by dividing 24 hours;
input receiving means for receiving an input of a room entry time and a room leaving time;
vacancy information retrieving means for retrieving, from the guest room information storing means, the guest room vacancy information corresponding to a room entry time block including the room entry time received by the input receiving means and the guest room vacancy information corresponding to a room leaving time block including the room leaving time received by the input means; and
output means for outputting a retrieval result obtained by the retrieval by the vacancy information retrieving means.

2. The accommodation reservation status retrieval device according to claim 1, comprising:
remaining time calculating means for calculating time from a start time of the room entry time block to the room entry time and time from the room leaving time to an end time of the room leaving time block; and
output means for outputting a calculation result obtained by the calculation by the remaining time calculating means.

3. An accommodation reservation status retrieval device for use in an accommodation all guest rooms of which are set as the same type of layout, the accommodation reservation status retrieval device comprising:
guest room information storing means for storing guest room vacancy information corresponding to respective time blocks obtained by dividing 24 hours;
input receiving means for receiving an input of a room entry time and a room leaving time;
vacancy information retrieving means for retrieving, from the guest room information storing means, the guest room vacancy information corresponding to a room entry time block including the room entry time received by the input receiving means and the guest room vacancy information corresponding to a room leaving time block including the room leaving time received by the input means; and
output means for outputting a retrieval result obtained by the retrieval by the vacancy information retrieving means.

4. A method for retrieving an accommodation reservation status comprising the steps of:
storing guest room vacancy information corresponding to respective time blocks obtained by dividing 24 hours;
receiving an input of a room entry time and a room leaving time;
retrieving, from the guest room information storing means, the guest room vacancy information corresponding to a room entry time block including the room entry time received by the input receiving means and the guest room vacancy information corresponding to a room leaving time block including the room leaving time received by the input receiving means; and
outputting a retrieval result obtained by the retrieval by the vacancy information retrieving means.

5. The method for retrieving an accommodation reservation status according to claim 4, comprising the steps of:
calculating time from a start time of the room entry time block to the room entry time, and time from the room leaving time to an end time of the room leaving time block; and
outputting a calculation result obtained by the calculation by the remaining time calculating means.

6. A method for retrieving an accommodation reservation status for use in an accommodation all guest rooms of which are set as the same type of layout, the method comprising the steps of:
storing guest room vacancy information corresponding to respective time blocks obtained by dividing 24 hours;
receiving an input of a room entry time and a room leaving time;
retrieving, from the guest room information storing means, the guest room vacancy information corresponding to a room entry time block including the room entry time received by the input receiving means and the guest room vacancy information corresponding to a room leaving time block including the room leaving time received by the input receiving means; and
outputting a retrieval result obtained by the retrieval by the vacancy information retrieving means.

7. A computer readable recording medium which records a program for making a computer function, the computer readable recording medium recording the program for exhibiting the functions of: with respect to the computer,
guest room information storing means for storing guest room vacancy information corresponding to respective time blocks obtained by dividing 24 hours;
input receiving means for receiving an input of a room entry time and a room leaving time;
vacancy information retrieving means for retrieving, from the guest room information storing means, the guest room vacancy information corresponding to a room entry time block including the room entry time received by the input receiving means and the guest room vacancy information corresponding to a room leaving time block including the room leaving time received by the input means; and
output means for outputting a retrieval result obtained by the retrieval by the vacancy information retrieving means.

8. A computer readable recording medium which records a program for making a computer function, the computer readable recording medium recording the program for exhibiting the functions of: with respect to the computer,
guest room information storing means for storing guest room vacancy information corresponding to respective time blocks obtained by dividing 24 hours;
input receiving means for receiving an input of a room entry time and a room leaving time;
vacancy information retrieving means for retrieving, from the guest room information storing means, the guest room vacancy information corresponding to a room entry time block including the room entry time received by the input receiving means and the guest room vacancy information corresponding to a room leaving time block including the room leaving time received by the input means;
output means for outputting a retrieval result obtained by the retrieval by the vacancy information retrieving means;
remaining time calculating means for calculating time from a start time of the time block including the room entry time to the room entry time, and time from the room leaving time to an end time of the time block including the room leaving time; and
output means for outputting a calculation result obtained by the calculation by the remaining time calculating means.

9. A computer readable recording medium which records a program formaking a computer function for use in an accommodation all guest rooms of which are set as the same type of layout, the computer readable recording medium recording the program for exhibiting the functions of: with respect to the computer,
guest room information storing means for storing guest room vacancy information corresponding to respective time blocks obtained by dividing 24 hours;
input receiving means for receiving an input of a room entry time and a room leaving time;
vacancy information retrieving means for retrieving, from the guest room information storing means, the guest room vacancy information corresponding to a room entry time block including the room entry time received by the input receiving means and the guest room vacancy information corresponding to a room leaving time block including the room leaving time received by the input means; and
output means for outputting a retrieval result obtained by the retrieval by the vacancy information retrieving means.
